# EUROPEAN PATENT SPECIFICATION

(11) **EP 0 543 266 B1**
(45) Date of publication and mention of the grant of the patent: **20.05.1998**
(21) Application number: 92119275.3
(22) Date of filing: 11.11.1992
(51) Int. Cl.: B64C 21/10, F15D 1/00

(54) **Agent for reducing the drag on bodies travelling in aeriform fluid media**
Mittel zur Verringerung des Luftwiderstandes
Agent pour reduire la trainée d'objet dans des fluides gazeux

(30) Priority: 22.11.1991 IT MI913130
(43) Date of publication of application: 26.05.1993
(73) Proprietor: SYREMONT S.p.A., I-20121 Milan (IT)
(72) Inventor: Fantacci, Gianfranco, I-19020 Ceparana-Bolano (La Spezia) (IT); Cozzi, Ennio, I-20020 Cantalupo di Cerro M. (Milano) (IT); Guidetti, Viviana, I-20035 Lissone (Milano) (IT)
(74) Representative: Gervasi, Gemma, Dr.

(56) References cited:
- FR-A- 1 127 847
- Description of standard measurement procedure ATICELCA 21-72

## Description

The present invention relates to a means or agent aiming at reducing the interface resistance opposed to (i.e., the drag on) a solid body which is moving inside a fluid medium.

In particular, the present invention relates to an agent which, once applied on to a solid surface, designed to move at high speed inside an aeriform fluid medium, reduces the resistance opposed to its advancing (i.e., the drag on it).

Still more precisely, the present invention relates to an agent for the treatment of surfaces of vehicles, in particular aircrafts, moving in air, for reducing the drag, i.e., aerodynamic resistance, caused by phenomena of turbolence at interface, icing, and so forth.

The problem of the general behaviour of a vehicle moving inside a fluid (either liquid or gaseous) medium, as regards the phenomenon of drag in said fluid medium (hydrodynamic, and, in particular, aerodynamic resistance) has caused increasing concern during the past years, owing to the increasing requisites of performace which are requested from the vehicles, in particular if designed to operate at high traveling speeds inside the fluid medium (air).

Said problem is particularly serious in case of aircrafts (airplanes, helicopters, gliders, and so forth), for which the aspect of aerodynamic resistance, and, in general, of drag, is particularly important.

In a similar way, also in the case of a land vehicle, the improvement of behaviour during high-speed motion has reached a real operating importance, for example in the case of special vehicles (cars), designed to take part in sporting races, and so forth.

On the other hand, it is well-known that certain technological results firstly accomplished in sophisticated application field, are generally transferred within a short time into wider, economically important contexts.

It will be enough to remind in this regard that it was calculated that, to each percent point of decrease in fluid-dynamic resistance, and, in particular, air-dynamic resistance, to a vehicle motion (drag), an equivalent saving of fuel corresponds. This ratio yields a quantitative indication of the economic implications inhering in the solution or improvement of the fluid-dynamic behaviour of moving vehicles, also correlated to important environmental aspects.

Such a kind of possibility may make it possible the flight parameters to be modulated in a more flexible way, i.e., for example, a higher speed to be reached with power being the same, or lower consumptions to be attained with traveling speed being the same.

Therefore, methods are known aiming at improving the fluid-dynamic behaviour of moving vehicles.

In the following discussion of the prior art, reference will not be made to the technology (painting), aiming at inhibitings the development of vegetable and/or animal forms, fouling, and so forth, and/or oxidation phenomena on the hulls (underbody) of boats or ships, which phenomena are a direct or indirect cause of drag applied on the boat owing to the increase in friction and/or weight values.

These requirements are met with particular paints or coatings suitably formulated outside the problem addressed in the present invention.

Furthermore, in the following, for clarity sake, we will refer to the behaviour of aircrafts in air, however it is evident the same, or similar, conclusions can be made relatively to land vehicles with high speed performance.

It is known that the drag applied by air on an aircraft also depends, with the other factors being the same, on the friction resistance of its surfaces relatively to air.

This characteristic mostly depends on the (macro and micro) roughness of the same surface.

In aerodynamically "finer" aircrafts, besides carefully designing the aerodynamic forms, already during the design and construction steps, the designers aim at obtaining an as-high-as-possible smoothness by:
-- letting into the interior of the structure the junctions and jointing means, such as rivets, and so forth;
-- processing the metal sheets in such a way as to obtain surfaces which are as smooth as possible, and using paints or vernishes which generate low-roughness coatings.

Furthermore the surfaces, in particular cases (races), are furthermore finished by polishing with the use of fine abrasives (talcum powder, and so forth).

However, obtaining surfaces with mirror-like finish meets often with unsurmountable problems of cost and, above all, of weight (several coating layers, and so forth), which practically annul, if even do not overcome, the behaviour advantages which can be reached, in particular as regards fuel consumptions.

In fact, besides the true behaviour at aircraft-air interface, such as the direction and regularity of flowing of the fluid threads on the moving surface, and so forth, also other factors, such as the behaviour as regards dusts, fumes, vapours, and in particular as regards the formation of hoarfrost or icing, with the consequent servicing and flight safety burdens, and so forth, contribute to the determination of the overall behaviour of a surface finish.

As a matter of fact, the surface finishes accomplished by means of the conventional coatings show the tendency to increase in roughness over time, which, among other, facilitates the adhesion of dirt (blades of grass, insects, lubricating oil, engine exhaust fumes, dusts, and so forth), which normally forms during the operating life of the aircraft (taxiing on grassy or dusty parkways, flights during spring-summer season, unavoidable oil losses, smoky exhaust gases, due to not perfect condition of engines, air pollution, and so forth).

The accurate removal of said dirt usually requires some hours, and furthermore icing or hoarfrost formation, both on ground and during flight, are burdensome to be removed.

Other solutions were also proposed and applied, such as the application of adhesive strips based on plastic materials (polytetrafluoroethylene), however substantially aiming at facilitating the detachment of ice pieces; or the coatings based on fluoro-siliconic and/or urethanic coating compounds, still in order to prevent icing ("icephobic coating").

In both above cases, it is evident that these systems substantially aim at facing one only of the aspects implied in the genesis of drag, i.e., icing, which, however, is of considerable importance for safety purposes, but with the drawback that the costs of renewal, cleaning, servicing, as well as, in particular, weight, are increased.

Finally, also systems of physical type were proposed, such as, e.g., a coating with a plastic material, or a paint, the surface of which is furrowed with extremely small, parallel grooves suitably orientated as a function of the flowing directions of the fluid threads calculated on the surface and having suitable values of depth and mutual distances for thread flowing conditions, for example, with the application of laser technologies. Not always this technology is compatible with the variuos materials which constitute the vehicle.

Furthermore, systems were proposed for reducing or preventing hoarfrost formation or icing by heating the surfaces exposed to such a phenomenon.

Summing-up, heretofore the prior art did not make it possible a physical and/or chemical system for treating a surface, in particular of an aircraft, destined to travel at a high speed in air, to be proposed in order to counteract the drag component caused by the adding-up of the effect which may occur at the interface (turbolence, icing, fouling by foreign materials, and so forth), without jeopardizing the safety and economy of managment of the aircraft.

Therefore, a purpose of the present invention is of providing an agent for reducing the drag (aerodynamic resistance to advancement) on a vehicle, in particular on an aircraft which is rapidly moving in air, due to the effect of the adding-up of the phenomena which occur at interface, such as the turbulence of flowing threads, icing, fouling by foreign materials, and so forth.

A particular purpose of the present invention is of providing an agent for reducing the drag on an aircraft traveling at high speed inside atmosphere, which is endowed with superior characteristics also as regards its action persistence and the greater facility of renewal and/or servicing, cleaning operations, and so forth.

Finally, still a further purpose is of providing an agent for drag reduction displaying particularly high characteristics of adhesion, water-repellancy, achievable smoothness degree and low critic surface tension, which render it a particularly suitable one for application on aircraft parts constituted by aluminium and aluminum alloys, composite materials, which may also be painted, and so forth.

These, and still other purposes, which will be clearer for those skilled in the art from the following disclosure, are achieved, according to the present invention, by an agent for the reduction of the aerodynamic resistance opposed to (i.e., drag applied on) solid bodies traveling in an aeriform fluid, in particular air, in which said agent is constituted by at least one chemical compound with a fluorine and/or silicon content of at least approximately 15%, an average molecular weight comprised within the range of from 500 to about 500,000, possibly borne in water and/or in an organic medium, and a contact angle with water (as measured according to the standard measurement procedure ATICELCA 21-72) of at least 80°.

By means of the application of the above defined agent, coatings are obtained which are capable of endowing the treated surface with levels of smoothness and low surface energy, associated with high values of contact angle, which are suitable for reducing drag to a substantial extent.

The polymeric or copolymeric products containing the above said content of fluorine and/or silicon, of at least 15%, and preferably comprised within the range of from 25% to approximately 60%, by weight, have demonstrated to be effective compounds.

In particular, these are polymers and/or copolymers based on tetrafluoroethylene, vinylidene fluoride, perfluoropropene, alkyl acrylates and/or methacrylates, alifatic and/or aromatic isocyanates, alifatic and/or aromatic polyols, silico-carbinols, polyether-polyols and their mixtures, and so forth, with the proviso that the polymer or copolymer shows the above said content of fluorine and/or silicon.

The above said polymeric compounds are per se known, and normally are, under room conditions, liquid or solid materials which can be borne in water and/or in an organic vehicle. Organic solvent suitable for possibly bearing said polymers usually are alifatic hydrocarbons, aromatic hydrocarbons, which may also be halogenated, esters, ketones, alcohols, glycol-ethers, and so forth, and which, if present, are capable of making it possible, after the removal of the volatile phase, continuous layers of the borne material to be obtained, which are endowed with high adhesion to the support, durability and low surface roughness. When selecting the vehicle, it is recommended that the evaporation speed thereof as a function of polymer spreading capacity and grafting onto the substrate is taken into consideration.

The above said polymeric compounds, useable according to the present invention, are available from the market and/or can be prepared according to conventional techniques, within the scope of the necessary features for the present invention.

Examples of products which can be found on the market, and which have shown to be suitable, are those which are traded under the following trade names or marks:
-- LUMIFLON^{(R)} (ASAHI GLASS Co Ltd - Tokyo (Japan));
-- CEFRAL COAT^{(R)} (CENTRAL GLASS Co Ltd - Tokyo (Japan));
-- AKEOGARD^{(R)} manufactured by Syremont S.p.A.- Italy,
   and
   those disclosed in U.S. patents U.S.-A-4,704,420 and U.S.-A-4,851,475; the contents of all of which are incorporated by reference thereto; and their mixtures.

The surfaces treated with the above listed products display particularly calibrated characteristics as regards the desired aerodynamic effect, and namely:
-- contact angle with water (as measured according to the standard measuring procedure ATICELCA MC 21-72) comprised within the range of from 80° to 130°;
-- adhesion to the support (as measured according to the standard ASTM method D 3359) higher than 3B, with values which may even be equal to 5B, i.e., full-scale value;
-- surface roughness (as measured by means of "Taly Surf 4" instrument by the Company Taylor-Hobson Rank Corp. - United Kingdom) lower than 0.05 µm, and comprised within the range of from 0.01 to 0.05 µm.

Those fluorinated polymers showed to be particularly effective, which are manufactured and traded by the Company Syremont S.p.A. - Italy, under the trademark AKEOGARD^{(R)}, and, in particular, the fluorinated polyurethanic products AKEOGARD^{(R)} FU 100, FU 50, SI and terpolymers, such as AKEOGARD^{(R)} CO, having the following characteristics:

**Table 1**

| Characteristics | AKEOGARD FU 100 | AKEOGARD FU 50 | AKEOGARD CO | AKEOGARD SI |
|---|---|---|---|---|
| Average molecular weight* | 4,000 | 2,500 | 350,000 | 4,500 |
| Fluorine % | 36 | 53 | 88 | 30 |
| Silicon % | -- | -- | -- | 3.85 |
| Contact angle ATICELCA MC 21-72 | 105° | 120° | 128° | 108° |
| Adhesion to carbon steel (ASTM D 3359) | 5B | 4B | 4B | 5B |
| Surface roughness (instrument: "Taly Surf 4") | 0,01 µm | 0,025 µm | 0,035 µm | 0,015 µm |

| | | | | |
|---|---|---|---|---|
| * From nuclear magnetic resonance ¹⁹F-NMR analyses | | | | |

The application can be carried out according to any processes as usually provided for the above said compounds, such as, e.g., air-operated or airless airbrush, brushing, dipping, and so on.

Furthermore, the surface to be treated needs not be treated by means of particular pre-treatment processes besides the usual recommended cleaning.

When so necessary and/or prescribed by the manufacturers of the products available from the market, catalysts are furthermore added in order to speed up the film crosslinking, with more even and stronger crosslinked coatings being obtained.

For example, tin salts, amines. naphthenates, and so forth, are used.

The present invention is disclosed now in greater detail with reference to the following examples, which however are supplied for merely illustrative, non-limitative purposes.

### EXAMPLE 1

The invention was practiced by way of experiment, by monitoring the aerodynamic behaviour of an aircraft and, namely, of a PIPER PA 28 RT airplane, with a 200-HP injection engine and propeller revolving at constant revolution speed.

The test was carried out as follows:
(A) Two sets of flights at constant heights of from 1000 to 10,000 feet were carried out in advance, with power supplied by the engine being kept constant at values of 50% and 75% of maximal engine power, in accordance with the data supplied by the manufaturer, respectively in the first and in the second set of flights. The aircraft weight at take-off, the flight times and procedures and the fuel consumptin were kept absolutely constant, so as to realize the tests at the various flying heights with a known, repeatable weight. After the landing, the aircraft was weighed again for check purposes.
   The results, in terms of indicated speed relatively to air, were then transformed and expressed as true speed relatively to air, as referred to standard atmosphere conditions (ISA = International Standard Atmosphere). The relevant data is reported in following Table 2.
(B) The same aircraft, under the same operating conditions as previously adopted, was treated, according to the present invention, by means of the application, as drag reducing agent, of the product: AKEOGARD^{(R)} FU 100, manufactured by the Company Syremont S.p.A. - Italy.
   The application process was:
   -- Cleaning and degreasing of the surfaces to be treated, with end sanding with sand paper and water, in order to remove any dirt residues;
   -- drying of the same surfaces with cloths and subsequent storage of the aircraft in hangar under ventilated conditions with low environmental humidity, in order to remove any moisture residues;
   -- formulation of the drag reduction agent, the viscosity of which was adjusted at the value of 20 seconds CF/4, by using, as solvent, a mixture of methoxypropanol acetate/ethyl acetate in the ratio of 50:50 by weight;
   -- addition of 0.01% by weight, relatively to the weight of the friction reducing agent, of dibutyltindilaurate as crosslinking catalyst;
   -- spray-application by compressed-air operated airbrush, previously washed with acetone, until a dry film thickness of approximately 30 micrometres was obtained;
   -- the aircraft was then left standing in hangar for some hours;
   -- aircraft weighing.
   The following parametric values of the coating were measured:
   -- contact angle (ATICELCA MC 21-72): 105°;
   -- adhesion to support (ASTM D 3359): 5 B;
   -- surface roughness (Taly-Surf 4 - Rank Corp.) : 0.01 µm.

Two sets of flights (B) were carried out according to the same operating modalities as of set (A).
-- Weight at take-off: 1,136.85 kg
-- Weight at landing: 1,062 kg
-- KTAS = Knots True Air Speed = true speed relatively to air, as knots (1 knot = 1,852 km/hour).

The data are reported in following Table 2:

**Table 2**

| Engine Power % | Flying height, feet | KTAS speed, "A" test set | KTAS speed, "B" test set | Gain, % |
|---|---|---|---|---|
| 50 | 3,000 | 122 | 130 | 6.56 |
| | 4,000 | 128 | 132 | 3.13 |
| | 5,000 | 128 | 132 | 3.13 |
| | 6,000 | 128 | 132 | 3.13 |
| | 7,000 | 128 | 132 | 3.13 |
| | 8,000 | 129 | 133 | 3.10 |
| | 9,000 | -- | 134 | -- |
| | 10,000 | -- | 131 | -- |
| 75 | 1,000 | 134 | 136 | 1.49 |
| | 2,000 | 135 | 138 | 2.22 |
| | 3,000 | 138 | 140 | 1.45 |
| | 4,000 | 140 | 143 | 2.14 |
| | 5,000 | 140 | 145 | 3.57 |
| | 6,000 | 140 | 146 | 4.29 |
| | 7,000 | 140 | 145 | 3.57 |
| | 8,000 | 140 | 144 | 2.86 |
| | 9,000 | 139 | 142 | 2.16 |
| | 9,500 | 138 | 140 | 1.45 |

Similar results were obtained when, for AKEOGARD^{(R)} FU 100, other products were replaced, having different composition and molecular weight values:
-- AKEOGARD^{(R)} FU 50, with an average molecular weight of approximately 1,500;
-- AKEOGARD^{(R)} CO, with an average molecular weight of approximately 350,000;
-- AKEOGARD^{(R)} SI, with an average molecular weight of approximately 4,500.

### EXAMPLE 2

After one month of normal use during summer season, during which it was parked on grass and without any intermediate cleaning treatment, the airplane treated as said hereinabove was washed with jets of water and low-concentration soap solution, only requiring minor interventions on some points of wing leading edge, in order to remove particulartly sticky insect residuals, and regained a so clean and glossy surface as it was soon after the treatment. The whole operation engaged 2 non-specialized operators for about 15 minutes. An analogous operation carried out on an equal, not treated, airplane after similar periods of use under the same environmental conditions, and in order to obtain the same cleanliness degree, required approximately 2 hours and engaged 2 operators.

### EXAMPLE 3

The durability of the drag reduction agent of Example 1 was evaluated.

On specimens prepared as disclosed in Example 1 on a support of aeronautical aluminium (Aluminium Alloy Alclad 2024) having a size of 160 x 70 mm, and a thickness of 3 mm, the following tests were carried out:
-- moisture resistance, according to ASTM D2247-68;
-- resistance to saline mist, according to ASTM B117-73;
-- fastness to radiation, according to ASTM D2244-79 (scale B2).

The following results were obtained:
-- moisture resistance = >1,000 hours
-- resistance to saline mist = >1,000 hours
-- fastness to radiation = 0,4 E
after 1,000 hours of exposure to sun-light lamp.

### EXAMPLE 4

The adhesion of the product used in Example 1 to various materials of possible use in aircraft construction was evaluated according to the ASTM standard procedure 3359. The product was applied onto specimens of 160 x 70 mm of size, and having thickness comprised within the range of from 0,8 to 3 mm, following the same procedure as reported in above Example 1. The following results were obtained:

| Support | Applied thickness, µm | Adhesion |
|---|---|---|
| Carbon steel | 30 | 5B |
| Aeronautical aluminum ALCLAD 2024 | 30 | 5B |
| Plastic laminate of fiberglass/polyester resin | 30 | 4B |
| Plastic laminate of carbon fibre/polyester resin | 30 | 4B |
| Pre-painted aluminum with polyurethanic paint | 50 + 30 | 5B |
| Pre-painted aluminum with acrylic paint | 50 + 30 | 5B |

On examining the results obtained from the experimental tests reported in Examples 1 - 4, one may observe that the aircraft showed, after the treatment, as compared to the same aircraft before the treatment:
-- appearance: pleasant. The pre-existing paint gained in glossy, giving the aircraft an "as new" appearance.
-- Weight increase of approximately 2,6 kg.
-- Improvement in flight characteristics.
   The flying speed, with the characteristics of weight, and of power supplied by the engine being the same, was improved by up to 4%; and respectively by up to 3%, at an output power of 75% at 50% of maximal power. In particular, it appeared that one might select, according to the desired flying conditions, for example, an output power of 75% of maximal power, with an increase in flying speed of approximately 4%, or a flying speed could be maintained which corresponds to the possible flying speed in the absence of the treatment, with a saving of approximately 16% in fuel consumption.
-- Improvement in cleaning ability. Lower adhesion of dirt. After one month of the treatment, under normal use conditions (as aircraft parking and engine starting up in grass-coated areas, considerable fouling by insects, and so forth, and no intermediate cleaning operations), the aircraft could be brought back to such cleanliness conditions as they were immediately after the treatment, within a time which is approximately 10% of the normally necessary time to clean untreated aircraft.

## Claims

1. Agent for the reduction of the aerodynamic resistance opposed to (i.e., drag applied on) a solid body traveling in an aeriform fluid, in particular air, characterized in that said agent comprises at least one compound with a fluorine and/or silicon content of at least 15%, an average molecular weight comprised within the range of from 500 to 500,000, and a contact angle with water (as measured according to the standard measurement procedure ATICELCA 21-72), higher than 80°.

2. Agent, according to claim 1, characterized in that said fluorine and/or silicon-containing compound has a contact angle with water, as measured according to the standard measurement procedure ATICELCA MC 21-72, comprised within the range of from 80° to 130°.

3. Agent, according to claim 1 and 2, characterized in that said compound is borne in a medium selected from water and an organic vehicle, or mixtures thereof.

4. Agent according to claim 1, 2 and 3, characterized in that its fluorine and/or silicon content is comprised within the range of from 25% to 60% by weight.

5. Agent according to the preceding claims, characterized in that said compound is selected from polymers and copolymers based on tetrafluoroethylene, vinylidene fluoride, perfluoropropene, alkyl acrylates and methacrylates, alifatic and/or aromatic isocyanates, alifatic and/or aromatic polyols, silico-carbinols, polyether-polyols and their mixtures, with the proviso that a content of fluorine and/or silicon of at least 15% is present.

6. Agent according to the preceding claims, characterized in that it is borne in a vehicle selected from water and alifatic hydrocarbons, aromatic hydrocarbons, which may also be halogenated, esters, ketones, alcohols, glycol-ethers.

7. Agent according to the preceding claims, selected from:
-- LUMIFLON^{(R)} (ASAHI GLASS Co Ltd - Tokyo (Japan));
-- CEFRAL COAT^{(R)} (CENTRAL GLASS Co Ltd - Tokyo (Japan));
-- AKEOGARD^{(R)}, SYREMONT S.p.A.- Italy;
and their mixtures.

8. Agent according to claim 7, selected from:
- AKEOGARD^{(R)} FU 100, with an average molecular weight of approximately 500;
- AKEOGARD^{(R)} FU 50, with an average molecular weight of approximately 1,500;
- AKEOGARD^{(R)} CO, with an average molecular weight of approximately 350,000;
- AKEOGARD^{(R)} SI, with an average molecular weight of approximately 4,500.

9. Agent for reducing the drag on aircrafts, airplanes, helicopters, gliders, as defined in claims from 1 to 8.

## Patentansprüche

1. Mittel zur Reduktion des aerodynamischen Widerstandes gegen einen festen Körper (d.h. des darauf ausgeübten Luftwiderstandes), der sich in einer luftförmigen Flüssigkeit bewegt, insbesondere Luft,
dadurch **gekennzeichnet,** daß
das Mittel wenigstens eine Verbindung mit einem Fluor- und/oder Silicium-Gehalt von wenigstens 15 %, einem mittleren Molekulargewicht innerhalb des Bereiches von 500 bis 500 000 und einem Kontaktwinkel mit Wasser (gemessen gemäß dem Standardmeßverfahren ATICELCA 21-72) von mehr als 80° umfaßt.

2. Mittel gemäß Anspruch 1,
dadurch **gekennzeichnet,** daß
die Fluor- und/oder Silicium-haltige Verbindung einen Kontaktwinkel mit Wasser, gemessen gemäß dem Standardmeßverfahren ATICELCA MC 21-72, innerhalb des Bereiches von 80° bis 130° aufweist.

3. Mittel gemäß Anspruch 1 und 2,
dadurch **gekennzeichnet,** daß
die Verbindung in einem Medium enthalten ist, das ausgewählt ist aus Wasser und einem organischen Träger oder Mischungen daraus.

4. Mittel gemäß Anspruch 1, 2 und 3,
dadurch **gekennzeichnet,** daß
sein Fluor- und/oder Silicium-Gehalt innerhalb des Bereiches von 25 bis 60 Gew.-% liegt.

5. Mittel gemäß den vorhergehenden Ansprüchen,
dadurch **gekennzeichnet,** daß
die Verbindung ausgewählt ist aus Polymeren und Copolymeren auf Basis von Tetrafluorethylen, Vinylidenfluorid, Perfluorpropen, Alkylacrylaten und -methacrylaten, aliphatischen und/oder aromatischen Isocyanaten, aliphatischen und/oder aromatischen Polyolen, Silicocarbinolen, Polyethyerpolyolen und ihren Mischungen, mit der Maßgabe, daß ein Fluor- und/oder Silicium-Gehalt von wenigstens 15 % vorhanden ist.

6. Mittel gemäß den vorhergehenden Ansprüchen,
dadurch **gekennzeichnet**, daß
es in einem Träger enthalten ist, der ausgewählt ist aus Wasser und aliphatischen Kohlenwasserstoffen, aromatischen Kohlenwasserstoffen, die auch halogeniert sein können, Estern, Ketonen, Alkoholen und Glykolethern.

7. Mittel gemäß den vorhergehenden Ansprüchen, ausgewählt aus:
- LUMIFLON® (ASAHI GLASS Co. Ltd. - Tokyo (Japan));
- CEFRAL COAT® (CENTRAL GLASS Co. Ltd. - Tokyo (Japan));
- AKEOGARD®, SYREMONT S.p.A. - Italien;
und ihren Mischungen.

8. Mittel gemäß Anspruch 7, ausgewählt aus:
- AKEOGARD® FU 100, mit einem mittleren Molekulargewicht von etwa 500;
- AKEOGARD® FU 50, mit einem mittleren Molekulargewicht von etwa 1 500;
- AKEOGARD® CO, mit einem mittleren Molekulargewicht von etwa 350 000;
- AKEOGARD® SI, mit einem mittleren Molekulargewicht von etwa 4 500.

9. Mittel zur Reduktion des Luftwiderstandes auf Luftfahrzeuge, Flugzeuge, Helikopter, Gleiter, wie in den Ansprüchen 1 bis 8 definiert.

## Revendications

1. Agent pour réduire la résistance aérodynamique s'opposant à un corps solide (c'est-à-dire la traînée s'y appliquant) en déplacement dans un fluide gazeux, en particulier dans l'air, caractérisé en ce que ledit agent comprend au moins un composé ayant une teneur en fluor et/ou en silicium d'au moins 15 %, d'une masse moléculaire moyenne comprise entre 500 et 500.000, et d'un angle de contact avec l'eau (mesuré selon la procédure standard de mesure ATICELCA 21-72) supérieur à 80°.

2. Agent selon la revendication 1, caractérisé en ce que ledit composé contenant du fluor et/ou du silicium a un angle de contact avec l'eau (mesuré selon la procédure standard de mesure ATICELCA 21-72) compris entre 80° et 130°.

3. Agent selon la revendication 1 et la revendication 2 caractérisé en ce que ledit composé est véhiculé dans un milieu choisi parmi l'eau et un véhicule organique ou des mélanges de ceux-ci.

4. Agent selon la revendication 1, 2 et 3, caractérisé en ce que sa teneur en fluor et/ou en silicium est comprise entre 25 % et 60 % en poids.

5. Agent les revendications précédentes, caractérisé en ce que ledit composé est choisi parmi les polymères et copolymères à base de tétrafluoroéthylène fluorure de vinylidène, perfluoropropène, acrylates et méthacrylates d'alkyle, isocyanates aliphatiques et/ou aromatiques, polyols aliphatiques et/ou aromatiques, silico-carbinols, polyéther-polyols et leurs mélanges, à la condition que qu'une teneur en fluor et/ou silicium d'au moins 15 % soit présente.

6. Agent selon les revendications précédentes, caractérisé en ce qu'il est véhiculé dans un véhicule choisi parmi l'eau et les hydrocarbures aliphatiques, les hydrocarbures aromatiques qui peuvent être halogénés, les esters, cétones, alcools et glycols-éthers.

7. Agent selon les revendications précédentes, choisis parmi :
- le LUMIFLON® (ASAHI GLASS Co. Ltd. Tokyo, Japan) ;
- le CEFRAL COAT® (CENTRAL GLASS Co. Ltd. Tokyo, Japan) ;
- l'AKEOGARD® SYREMONT S.p.a. Italie ;
et leurs mélanges.

8. Agent selon la revendication 7, choisi parmi :
- l'AKEOGARD® FU 100 d'un poids moléculaire moyen d'environ 500 ;
- l'AKEOGARD® FU 50 d'un poids moléculaire moyen d'environ 1.500 ;
- l'AKEOGARD® CO d'un poids moléculaire moyen d'environ 350.000 ;
- l'AKEOGARD® SI d'un poids moléculaire moyen d'environ 4.500 ;

9. Agent pour réduire la traînée sur les engins volants, les avions, les hélicoptères, les planeurs selon les revendications 1 à 8.
